# EUROPEAN PATENT APPLICATION

(11) **EP 2 750 025 A1**
(43) Date of publication of application: **02.07.2014**
(21) Application number: 13275074.6
(22) Date of filing: 22.03.2013
(51) Int. Cl.: G06F 3/147, G06Q 30/02, G06K 19/07

(54) **Electronic shelf labeling system**

(30) Priority: 28.12.2012 KR 20120156849
(71) Applicant: Samsung Electro-Mechanics Co., Ltd, Suwon, Gyunggi-Do (KR)
(72) Inventor: Kim, Hyun Hak, Gyunggi-do (KR)
(74) Representative: Potter Clarkson LLP

(57) **Abstract**

There is provided an electronic shelf labeling (ESL) system including a plurality of ESL tags displaying merchandise item information; and a gateway providing the plurality of ESL tags with update data for the merchandise item information and transmitting wireless power to at least a portion of the plurality of ESL tags by using wireless communications, wherein the at least a portion of the plurality of ESL tags are charged with the wireless power.

## Description

### CROSS-REFERENCE TO RELATED APPLICATIONS

This application claims the priority of Korean Patent Application No. 10-2012-0156849 filed on December 28, 2012, in the Korean Intellectual Property Office, the disclosure of which is incorporated herein by reference.

### BACKGROUND OF THE INVENTION

### Field of the Invention

The present invention relates to an electronic shelf labeling (ESL) system, and more particularly, to an ESL system in which ESL tags are wirelessly chargeable.

### Description of the Related Art

In general, as tag technologies and local area wireless communications advance, various tag-based systems have been developed. An electronic shelf labeling (ESL) system is one of such tag-based systems, applied to various environments such as large supermarkets in which various items are frequently provided for sale.

Such ESL systems may be implemented by establishing wireless personal area networks based on local area wireless technologies such as Zigbee. For example, an ESL system may include a gateway which wirelessly provides data obtained from an ESL server, and ESL tags displaying merchandise item information and the like, based on data provided from the gateway.

Here, the ESL tags operate with their own power. Therefore, efficient power management of ESL tags is an important consideration in any ESL system.

In the related art, there is a known technology for power management, in which ESL tags are set to be in an idle state, i.e., a sleep state, for a certain period of time, and set to be in a wake-up state only when data is sent or received.

However, the technology cannot provide a solution to overcome basic limitations of power management of the ESL tags, i.e. , it cannot cope with a situation in which power is consumed to an extent beyond a certain level.

The following Related Art Documents fail to solve the above-mentioned problems.

### [Related Art Documents]

(Patent Document 1) Korean Patent Laid-Open Publication No. 10-2006-0053036 A
(Patent Document 2) US Patent Application Publication No. 2011/0241843

### SUMMARY OF THE INVENTION

An aspect of the present invention provides an electronic shelf labeling system in which ESL tags are wirelessly charged via wireless communications, such that power management of the ESL tags can be fundamentally improved.

According to an aspect of the present invention, there is provided an electronic shelf labeling (ESL) system including: a plurality of ESL tags displaying merchandise item information; and a gateway providing the plurality of ESL tags with update data for the merchandise item information and transmitting wireless power to at least a portion of the plurality of ESL tags by using wireless communications, wherein the at least a portion of the plurality of ESL tags are charged with the wireless power.

The gateway may generate the wireless power using a magnetic resonance method or an electromagnetic method.

The gateway may include a gateway controlling unit performing wireless communications with the plurality of ESL tags using a first frequency band to provide the update data; and a power transmission unit controlling the transmitting of the wireless power using a second frequency band different from the first frequency band.

The gateway may further include a power transmission antenna including a resonance transmission coil, the resonance transmission coil generating a resonance frequency in the second frequency band, and the power transmission unit may control supply of driving power to the power transmission antenna so that the transmitting of the wireless power is controlled.

Each of the ESL tags may include a power reception antenna including a resonance reception coil, the resonance reception coil resonating with the resonance frequency in the second frequency band to receive the wireless power.

Each of the ESL tags may further include a power storage unit charged with the wireless power received by the power reception antenna; and a power management unit monitoring the power stored in the power storage unit and requesting transmission of the wireless power from the power transmission unit when a predetermined condition is satisfied.

The power management unit may control the ESL tag to receive the wireless power in a sleep state in which the ESL tag does not receive the update data.

The ESL system may further include an ESL system server providing the plurality of ESL tags with the update data through the gateway and monitoring respective power states of the plurality of ESL tags.

According to another aspect of the present invention, there is provided an ESL system including: a plurality of ESL tags displaying merchandise item information; a gateway providing the plurality of ESL tags with update data for the merchandise item information and transmitting wireless power to be transmitted to at least a portion of the plurality of ESL tags by using wireless communications; and at least one repeater receiving the wireless power transmitted from the gateway and retransmitting the wireless power to the at least a portion of the plurality of ESL tags, wherein the at least a portion of the plurality of ESL tags are charged with the wireless power retransmitted by the at least one repeater.

The gateway may include a gateway controlling unit performing wireless communications with the plurality of ESL tags using a first frequency band to provide the update data; a power transmission antenna including a resonance transmission coil, the resonance transmission coil generating a resonance frequency in a second frequency band different from the first frequency band; and a power transmission unit controlling supply of driving power to the power transmission antenna such that the transmitting of the wireless power is controlled.

The repeater may include a power reception antenna including a resonance reception coil, the resonance reception coil resonating with the resonance frequency in the second frequency band to receive the wireless power; and a power transmission antenna including a resonance transmission coil, the resonance transmission coil generating a resonance frequency in a third frequency band different from the first and second frequency bands, using the received wireless power.

Each of the ESL tags may include a power reception antenna including a resonance reception coil, the resonance reception coil resonating with the resonance frequency in the third frequency band to receive the wireless power; a power storage unit charged with the wireless power received by the power reception antenna; and a power management unit monitoring the power stored in the power storage unit and requesting transmission of the wireless power from the repeater when a predetermined condition is satisfied.

The repeater may include a power transceiver antenna re-resonating with and transmitting the resonance frequency in the second frequency band generated by the gateway.

Each of the ESL tags may include a power reception antenna including a resonance reception coil, the resonance reception coil resonating with the resonance frequency in the second frequency band transmitted from the repeater to receive the wireless power; a power storage unit charged with the wireless power received by the power reception antenna; and a power management unit monitoring the power stored in the power storage unit and requesting transmission of the wireless power from the repeater when a predetermined condition is satisfied.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a diagram schematically illustrating an electronic shelf labeling system according to an embodiment of the present invention;
FIG. 2 is a block diagram illustrating an electronic shelf labeling server according to an embodiment of the present invention;
FIG. 3 is a block diagram illustrating a gateway according to an embodiment of the present invention;
FIG. 4 is a block diagram illustrating ESL tags according to an embodiment of the present invention;
FIG. 5 is a reference diagram illustrating an example of a method of transmitting wireless power according to the present invention;
FIG. 6 is a diagram schematically illustrating an electronic shelf labeling system according to another embodiment of the present invention; and
FIG. 7 is a block diagram illustrating a repeater according to an embodiment of the present invention.

### DETAILED DESCRIPTION OF THE EMBODIMENTS

Hereinafter, embodiments of the present invention will be described in detail with reference to the accompanying drawings.

The invention may, however, be embodied in many different forms and should not be construed as being limited to the embodiments set forth herein. Rather, these embodiments are provided so that this disclosure will be thorough and complete, and will fully convey the scope of the invention to those skilled in the art.

Throughout the drawings, the same or like reference numerals will be used to designate the same or like elements.

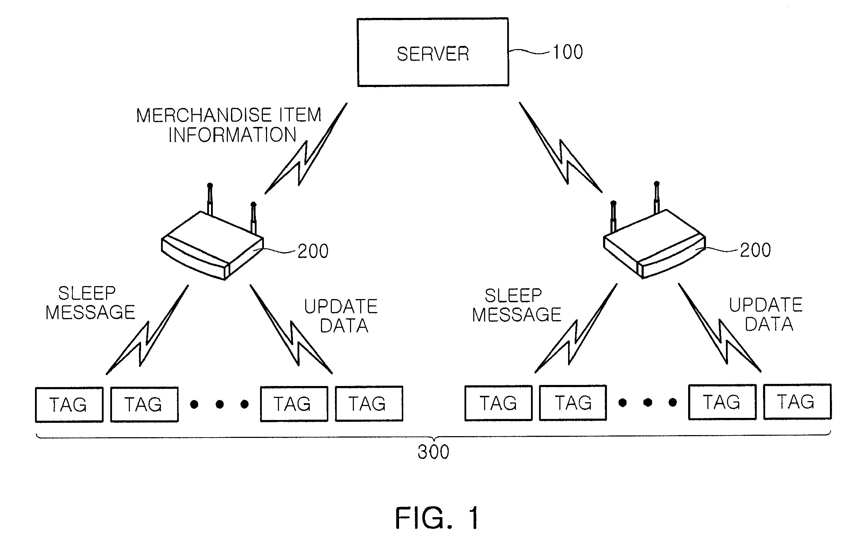

FIG. 1 is a diagram illustrating an electronic shelf labeling system according to an embodiment of the present invention. In the electronic shelf labeling (hereinafter referred to as "ESL") system of FIG. 1, ESL tags 300 may be wirelessly charged using wireless power.

More specifically, referring to FIG. 1, the ESL system according to the embodiment of the present invention may include an ESL server 100, at least one gateway 200, and a plurality of ESL tags 300.

The ESL server 100 may provide the ESL tags 300 with data for update via the gateway 200. Here, the ESL server 100 and the gateway 200 may be connected to each other in a wired or wireless manner.

Further, the ESL server 100 may monitor respective power states of the ESL tags 300. In the embodiment, the ESL system may further include a management terminal (not shown), and the ESL server 100 may provide the management terminal with monitoring data on the power states of the ESL tags 300.

The gateway 200 may provide the ESL tags 300 with update data of information on merchandise items using wireless communications. For instance, the gateway 200 may broadcast wake-up messages to the ESL tags 300 over wake-up channels, and, when one of the ESL tags 300 that has received the wake-up messages requests update data, the gateway 200 may provide the corresponding ESL tag with update data over an update channel.

Further, the gateway 200 may transmit wireless power to at least a portion of the ESL tags. Here, the gateway 300 may supply power in a wireless manner, and the term "wireless power" refers to power supplied in a wireless manner. For example, wireless power may be supplied by a magnetic resonance method using a resonance frequency or by an electromagnetic method using microwaves.

The ESL tags 300 may indicate information on merchandise items. The ESL tags 300 may update the information by receiving update data via the gateway 200.

Further, the ESL tags 300 may charge themselves using the wireless power supplied from the gateway 200.

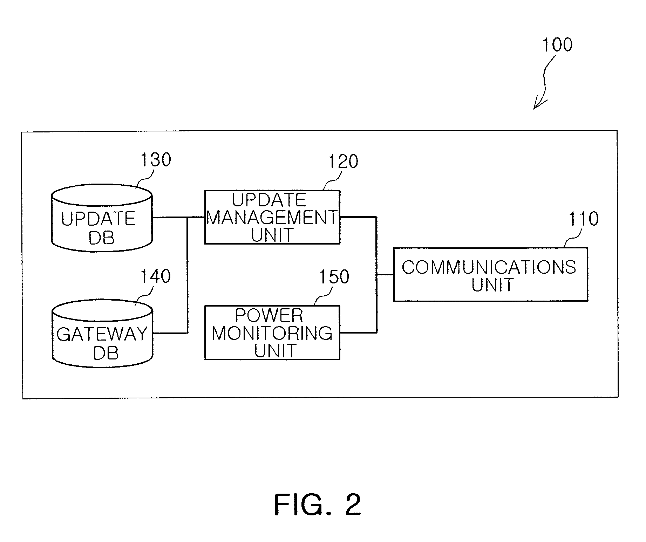

The ESL server 100, the gateway 200 and the ESL tags 300 will be described in more detail with reference to FIGS. 2 through 5.

FIG. 2 is a diagram illustrating an ESL server according to an embodiment of the present invention.

Referring to FIG. 2, the ESL server 100 may include a communications unit 110, an update management unit 120, an update database 130, a gateway database140, and a power monitoring unit 150.

The communications unit 110 may perform communications with the gateway 200.

The update management unit 120 may provide the gateway 200 with update data. For example, in a case in which there is update data for a specific ESL tag among the ESL tags 300, the ESL server 100 may provide the update data to a corresponding gateway 200 able to directly communicate with the specific ESL tag.

To this end, the ESL server 100 may include the gateway, the gateway database 140 storing information on the corresponding gateway and nodes associated therewith, and the update database 130 storing update data.

In an embodiment, the update management unit 120 may receive information on merchandise items from the outside to update the database 140.

The power monitoring unit 150 may maintain monitoring data on power states of the ESL tags 300 included in the ESL system. In an embodiment, the ESL tags 300 may provide the gateway with their information on power states, and the power monitoring unit 150 may collect the information on power states to create or update the monitoring data.

In an embodiment, the power monitoring unit 150 may provide a separate management terminal (not shown) with the monitoring data in a wired or wireless manner. Accordingly, a manager may easily monitor the power states of the ESL tags 300 included in the ESL system using a management terminal such as a PDA.

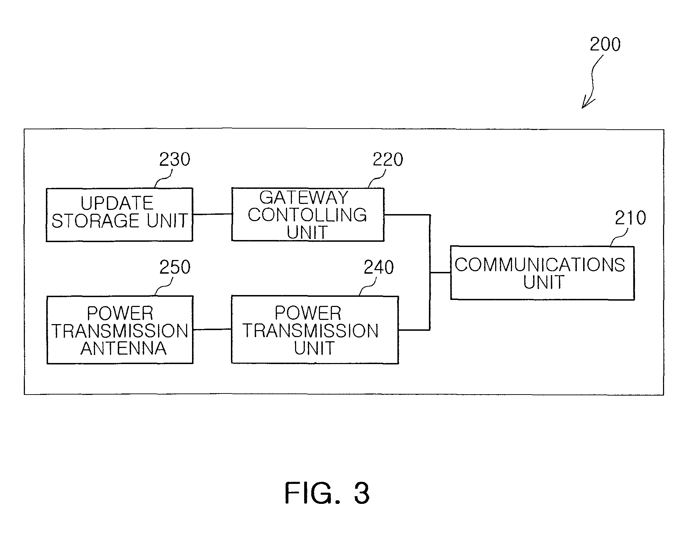

FIG. 3 is a diagram illustrating a gateway according to an embodiment of the present invention.

Referring to FIG. 3, the gateway 200 may include a communications unit 210, a gateway controlling unit 220, an update storage unit 230, a power transmission unit 240, and a power reception antenna 250.

The communications unit 210 may include a first communications module and a second communications module. Here, the first communications module may configure communications with the ESL server 100 and the second communications module may configure communications with the ESL tags 300. In an embodiment in which the ESL tags 300, a wake-up channel, and a data channel are separately provided, the second communications module may be configured of two communications modules (i.e., a wake-up communications module and a data channel communications module) performing respective communications using different frequency bands.

The gateway controlling unit 220 may control other components of the gateway 200.

The gateway controlling unit 220 may perform wireless communications with the plurality of ESL tags using a first frequency band to provide update data. Here, when an update data channel and a data channel are separately used, the first frequency band includes a frequency band of the update data channel and a frequency band of the data channel. That is to say, the first frequency band is so named for the purpose of distinguishing it from the second frequency band supplying wireless power to be described, but the first frequency band does not necessarily refer to a single frequency band.

In an embodiment, the gateway controlling unit 220 may control update data obtained from the ESL server 100 to be stored in the update storage unit 240. This is necessary because the update data needs to be temporarily stored in the gateway 200 until the corresponding ESL tag 300 enters a wake-up state.

In an embodiment, the gateway controlling unit 220 may regularly broadcast a wake-up message to the ESL tag 300 over a wake-up channel. Here, broadcasting refers to transmitting data according to a communications protocol which does not require a response from a receiving side. In an embodiment, the gateway controlling unit 220 may broadcast a wake-up message under the control of the ESL server 100. The wake-up message may include an identifier to identify a corresponding ESL tag to be updated.

Upon receiving a request for update data from the corresponding ESL tag having received the wake-up message, the gateway controlling unit 220 may search the update storage unit 230 for corresponding update data to provide the corresponding update data to the ESL tag 300.

The update storage unit 240 may store the update data provided from the ESL server 100.

The power transmission unit 240 may control the supply of wireless power using a second frequency band different from the first frequency band.

In an embodiment, the power transmission unit 240 may control wireless power such that it is only supplied when the ESL tags 300 are not in a wake-up state (i.e. , when the ESL tags 300 are in a sleep state). The reason is that, during the wake-up state, transmission of a wake-up message or update data may be going on, such that it may conflict with the wireless power being supplied, even if they are being supplied using different frequency bands, or that charge efficiency is low while power is being consumed.

In an embodiment, the power transmission unit 240 may supply wireless power upon receiving a request from the ESL tag 300. For example, upon receiving a request for wireless power from the ESL tag 300 or determining that the power state of the ESL tag 300 is below a certain value, the power transmission unit 240 may control the power transmission antenna 250 such that it supplies wireless power.

In another embodiment, the power transmission unit 240 may continuously supply a constant amount of wireless power, regardless of a request from the ESL tags 300. In this case, the ESL tags 300 may determine whether or not to charge themselves.

The power transmission antenna 250 may supply the ESL tags 300 with wireless power using a second frequency band.

In an embodiment, the gateway 200 may transmit wireless power using a magnetic resonance method. In this case, the power transmission antenna 250 may include a resonance transmission coil generating a resonance frequency in the second frequency band. In this manner, the power transmission unit 240 may control the supply of driving power to the power transmission antenna, such that the supply of wireless power is controlled.

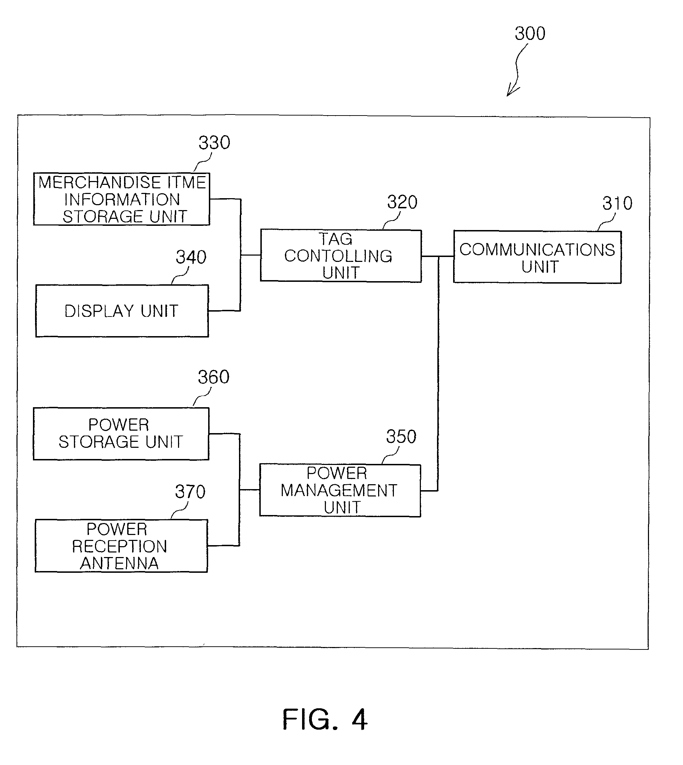

FIG. 4 is a diagram illustrating an ESL tag according to an embodiment of the present invention.

Referring to FIG. 4, the ESL tag 300 may include a communications unit 310, a tag controlling unit 320, a merchandise item information storage unit 330, a display unit 340, a power management unit 350, a power storage unit 360 and a power reception antenna 370.

The communications unit 310 may configure a wireless communications environment with the gateway 200 for update. The communications unit 310, like the communications unit 210 of the gateway, may be configured of two communications modules having two different frequency bands in a case in which a wake-up channel and a data channel are separately provided.

The tag controlling unit 320 may control other components of the ESL tag 300 such that the ESL tag 300 is driven.

In an embodiment, the tag controlling unit 320 may set the ESL tag 300 to a sleep state or a wake-up state. For example, the tag controlling unit 320 may control the ESL tag 300 to remain in a sleep state for a certain period of time and then enter a wake-up state, and when a wake-up message from the gateway 200 includes an identification information of the corresponding ESL tag 300, the tag controlling unit 320 may transmit a request for update data to the gateway 200. When the wake-up message does not include the identification information of the corresponding ESL tag 300, the tag controlling unit 320 may set the ESL tag 300 to the sleep state for the certain period of time.

In an embodiment, the tag controlling unit 320 may control update data obtained from the gateway 200 to be stored in the merchandise item information storage unit 340. In an embodiment, in a case in which the tag controlling unit 320 receives update data in response to a request for update data, the update data may be stored in the merchandise item information storage unit 340.

In an embodiment, the tag controlling unit 320 may control the display unit 350 such that information stored in the merchandise item information storage unit 340 is displayed externally.

The merchandise item information storage unit 330 may store update data obtained from the gateway 200.

The display unit 350 may externally display contents corresponding to data stored in the merchandise item information storage unit 330. The display unit 350 includes various types of display means such as a LED, a LCD, and the like and is not limited to specific means.

The power management unit 350 may manage the power of the ESL tag 300.

In an embodiment, the power management unit 350 may monitor the power of the ESL tag 300 and request wireless power from the gateway 200. For example, the power management unit 350 monitors power stored in the power storage unit 360 and requests transmission of wireless power from the gateway 200 when a predetermined condition is satisfied (e.g., residual power is below a certain value).

In an embodiment, the power management unit 350 may generate information on the power state of the ESL tag 300 to provide the gateway 200 therewith. The gateway 200 may determine whether to supply wireless power to the corresponding ESL tag 300 based on the information on the power state of the ESL tag.

In an embodiment, the power management unit 350 may perform controlling such that wireless power is only received in a sleep state. Specifically, in the case in which the ESL tag is set, by the tag controlling unit 320, to be in the sleep state in which update data is not received, the power management unit 350 may control the power reception antenna 370 such that the wireless power supplied from the gateway 200 is only received in the sleep state.

The power storage unit 360 may charge the ESL tag 300 using the wireless power received by the power reception antenna 370.

The power reception antenna 370 may receive the wireless power transmitted from the gateway 200. In a magnetic resonance method, as an example, the power reception antenna 370 may include a resonance reception coil which receives wireless power by resonating with a resonance frequency in the second frequency band. Here, as described above, the second frequency band is different from the first frequency band for update.

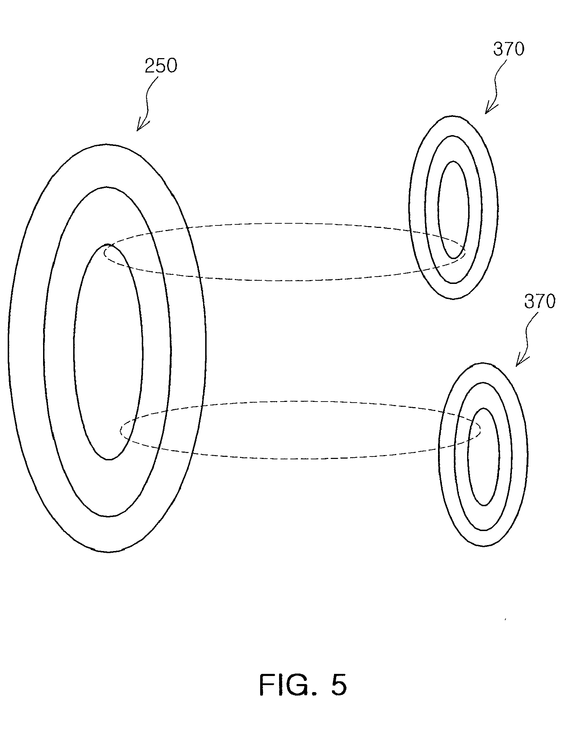

FIG. 5 is a reference diagram illustrating an example of a method of transmitting wireless power according to an embodiment of the present invention. In the example shown in FIG. 5, a magnetic resonance method is used.

Referring to FIG. 5, the gateway 200 may include the power transmission antenna 250 including a resonance reception coil to generate a resonance frequency in a certain frequency band.

In addition, the ESL tag 300 may include the power reception antenna 370 including a resonance reception coil resonating in the certain frequency band.

Accordingly, the resonance frequency generated by the resonance transmission coil causes the resonance reception coil which is present within its magnetic field to resonate, such that energy is transmitted by evanescent wave coupling.

As can be seen, since every resonance reception coil within the range of the resonance frequency generated by the resonance transmission coil, i.e., the range of the magnetic field, resonates, transmission/reception efficiency of wireless power is increased. In addition, such a magnetic resonance method is less directional and is less affected by obstacles, thereby increasing power transmission efficiency.

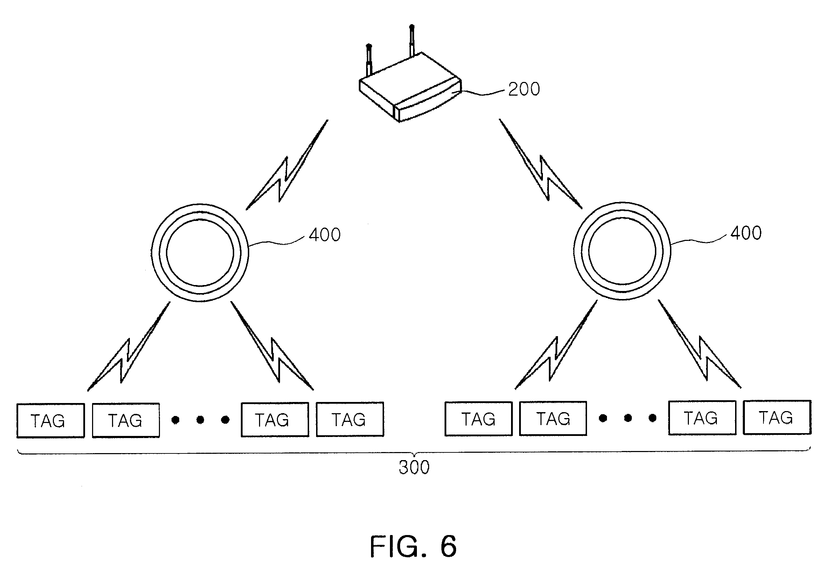

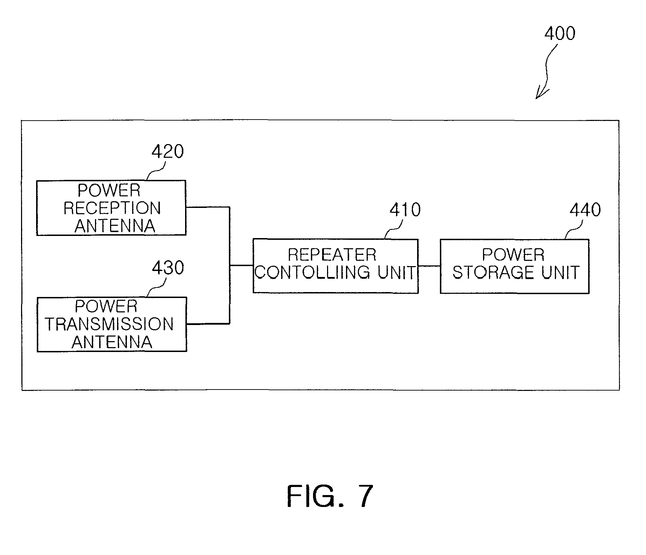

FIG. 6 is a reference diagram schematically illustrating an ESL system according to another embodiment of the present invention, and FIG. 7 is a block diagram schematically illustrating a repeater according to an embodiment of the present invention.

Hereinafter, the ESL system according to another embodiment will be described in more detail with reference to FIGS. 6 and 7. Hereinafter, elements the same as or equivalent to the elements described above with reference to FIG. 1 through 5 will not be described again. However, those skilled in the art would easily understand the ESL system according to the above description.

Referring to FIG. 6 and 7, the ESL system according to another embodiment further includes a repeater 400.

In the embodiment shown in FIG. 6 and 7, wireless power is supplied from the gateway 200 to the ESL tags 300 via the repeater 400.

Further, the repeater 400 may receive the wireless power transmitted from the gateway 200 to retransmit it to the ESL tags 300.

The repeater 400 may include a repeater controlling unit 410, a power reception antenna 420 and a power transmission antenna 430. In an embodiment, the repeater 400 may further include a power storage unit 440.

The repeater controlling unit 410 may control other components of the repeater 400.

In an embodiment, the repeater controlling unit 410 may use the wireless power received by the power reception antenna 420 to transmit the wireless power to the ESL tags 300 via the power transmission antenna 430.

In an embodiment, the repeater controlling unit 410 may control the wireless power received by the power reception antenna 420 to be stored in the power storage unit 440, and use the stored wireless power to transmit the wireless power to the ESL tags 300 via the power transmission antenna 430.

The power reception antenna 420 may include a resonance reception coil resonating with a resonance frequency in a certain frequency band provided by the gateway 200 to receive wireless power.

The power transmission antenna 430 may include a resonance transmission coil generating a resonance frequency in a third frequency band different from the certain frequency band provided by the gateway 200. In this case, the resonance transmission coil may operate by using the wireless power received by the power reception antenna 420.

In the embodiment described above, the power reception antenna 420 and the power transmission antenna 430 are separate elements using different frequencies.

However, in another embodiment, the repeater 400 may receive and transmit power using a single antenna, i.e., a single resonance coil. Specifically, the repeater 400 may include a repeater coil of which resonance frequency matches those of the transmission coil of the gateway 200 and the reception coil of the ESL tag 300, and re-resonate with the resonance frequency of the certain frequency band generated by the gateway 200 to send it. In other words, the gateway 200, the repeater 400, and the ESL tags 300 may use the same resonance frequency. In this case, the repeater 400 may retransmit wireless power by resonance. Accordingly, separate control may not be necessary. In addition, in this configuration, when the repeater 400 is located in a space between the gateway 200 and the ESL tags 300, resonance can be more effective.

As set forth above, according to embodiments of the invention, ESL tags are wirelessly charged via wireless communications, such that power management of the ESL tags of an ESL system can be fundamentally improved.

While the present invention has been shown and described in connection with the embodiments, it will be apparent to those skilled in the art that modifications and variations can be made without departing from the spirit and scope of the invention as defined by the appended claims.

## Claims

1. An electronic shelf labeling (ESL) system comprising:
a plurality of ESL tags displaying merchandise item information; and
a gateway providing the plurality of ESL tags with update data for the merchandise item information and transmitting wireless power to at least a portion of the plurality of ESL tags by using wireless communications,
wherein the at least a portion of the plurality of ESL tags are charged with the wireless power.

2. The ESL system of claim 1, wherein the gateway generates the wireless power using a magnetic resonance method or an electromagnetic method.

3. The ESL system of claim 2, wherein the gateway includes:
a gateway controlling unit performing wireless communications with the plurality of ESL tags using a first frequency band to provide the update data; and
a power transmission unit controlling the transmitting of the wireless power using a second frequency band different from the first frequency band.

4. The ESL system of claim 3, wherein the gateway further includes a power transmission antenna including a resonance transmission coil, the resonance transmission coil generating a resonance frequency in the second frequency band, and
the power transmission unit controls supply of driving power to the power transmission antenna so that the transmitting of the wireless power is controlled.

5. The ESL system of claim 3 or 4, wherein each of the ESL tags includes a power reception antenna including a resonance reception coil, the resonance reception coil resonating with the resonance frequency in the second frequency band to receive the wireless power.

6. The ESL system of claim 5, wherein each of the ESL tags further includes:
a power storage unit charged with the wireless power received by the power reception antenna; and
a power management unit monitoring the power stored in the power storage unit and requesting transmission of the wireless power from the power transmission unit when a predetermined condition is satisfied.

7. The ESL system of claim 6, wherein the power management unit controls the ESL tag to receive the wireless power in a sleep state in which the ESL tag does not receive the update data.

8. The ESL system of claim 1, further comprising an ESL system server providing the plurality of ESL tags with the update data through the gateway and monitoring respective power states of the plurality of ESL tags.

9. An electronic shelf labeling system (ESL) comprising:
a plurality of ESL tags displaying merchandise item information;
a gateway providing the plurality of ESL tags with update data for the merchandise item information and transmitting wireless power to be transmitted to at least a portion of the plurality of ESL tags by using wireless communications; and
at least one repeater receiving the wireless power transmitted from the gateway and retransmitting the wireless power to the at least a portion of the plurality of ESL tags,
wherein the at least a portion of the plurality of ESL tags are charged with the wireless power retransmitted by the at least one repeater.

10. The ESL system of claim 9, wherein the gateway includes:
a gateway controlling unit performing wireless communications with the plurality of ESL tags using a first frequency band to provide the update data;
a power transmission antenna including a resonance transmission coil, the resonance transmission coil generating a resonance frequency in a second frequency band different from the first frequency band; and
a power transmission unit controlling supply of driving power to the power transmission antenna such that the transmitting of the wireless power is controlled.

11. The ESL system of claim 10, wherein the repeater includes:
a power reception antenna including a resonance reception coil, the resonance reception coil resonating with the resonance frequency in the second frequency band to receive the wireless power; and
a power transmission antenna including a resonance transmission coil, the resonance transmission coil generating a resonance frequency in a third frequency band different from the first and second frequency bands, using the received wireless power.

12. The ESL system of claim 11, wherein each of the ESL tags includes:
a power reception antenna including a resonance reception coil, the resonance reception coil resonating with the resonance frequency in the third frequency band to receive the wireless power;
a power storage unit charged with the wireless power received by the power reception antenna; and
a power management unit monitoring the power stored in the power storage unit and requesting transmission of the wireless power from the repeater when a predetermined condition is satisfied.

13. The ESL system of claim 10, wherein the repeater includes a power transceiver antenna re-resonating with and transmitting the resonance frequency in the second frequency band generated by the gateway.

14. The ESL system of claim 13, wherein each of the ESL tags includes:
a power reception antenna including a resonance reception coil, the resonance reception coil resonating with the resonance frequency in the second frequency band transmitted from the repeater to receive the wireless power;
a power storage unit charged with the wireless power received by the power reception antenna; and
a power management unit monitoring the power stored in the power storage unit and requesting transmission of the wireless power from the repeater when a predetermined condition is satisfied.
